Europäisches Patentamt

European Patent Office

Office européen des brevets

(11) Numéro de publication : **0 518 841 A1**

(12) # DEMANDE DE BREVET EUROPEEN

(21) Numéro de dépôt : **92870078.0**

(22) Date de dépôt : **22.05.92**

(51) Int. Cl.$^5$ : **A01K 7/00**

(30) Priorité : **03.06.91 BE 9100533**

(43) Date de publication de la demande :
**16.12.92 Bulletin 92/51**

(84) Etats contractants désignés :
**AT BE CH DE DK ES FR GB GR IT LI NL PT SE**

(71) Demandeur : **Raemaekers, Jean-Louis**
**Koning Albertstraat, 34**
**B-9968 Oosteeklo (BE)**

(72) Inventeur : **Raemaekers, Jean-Louis**
**Koning Albertstraat, 34**
**B-9968 Oosteeklo (BE)**

(74) Mandataire : **Vanderperre, Robert et al**
**Bureau Vander Haeghen S.A. Rue Colonel**
**Bourg 108 A**
**B-1040 Bruxelles (BE)**

(54) **Enceinte de protection d'un dispositif d'abreuvement automatique et de récupération d'eau perdue dans une étable.**

(57)    Une enceinte de protection d'un équipement d'alimentation en eau potable dans une étable destinée à l'élevage de porcs et de bestiaux permet une économie appréciable en eau lorsque le système d'alimentation est enfermé derrière un isoloir à fond étanche (7) fixé au mur (5) d'une étable.

F I G. 1

La présente invention est relative à une enceinte de protection d'un dispositif d'abreuvement automatique et de récupération d'eau perdue comprenant une conduite d'alimentation en eau potable et en téton d'abreuvement automatique actionné par un animal.

L'invention trouve sa principale application dans l'élevage des porcs et des bestiaux. Le dispositif est utile dès le sevrage des porcelets.

Le dispositif d'abreuvement le plus répandu est le téton d'abreuvement. L'appareil comporte un embout d'une conduite d'alimentation en eau potable muni d'un téton formant saillie et d'un levier qui est actionné par l'animal pendant qu'il boit ou qu'il tête.

Le téton d'abreuvement est généralement fixé sur le mur de fond d'un compartiment d'étable à la hauteur requise aussi bien pour les porcs que les moutons et les chèvres. De ce fait, les animaux peuvent s'abreuver à volonté de manière à obtenir une meilleure croissance.

On a cependant constaté que les animaux tripotent le téton de manière à gaspiller beaucoup d'eau.

Surtout en été, ces animaux ne se privent pas de mordiller pendant de nombreuses heures le téton sans s'abreuver. Aussi, pendant que les animaux s'abreuvent une partie de l'eau est gaspillée car elle dégouline de chaque côté de la gueule sur le sol. L'eau ainsi gaspillée se mélange au lisier et en rend le stockage difficile. Depuis quelques années, on cherche à diminuer le volume du lisier, sans contrarier les animaux à assouvir leur soif. Dans la plupart des élevages de porcs et de bestiaux on prévoit une capacité de stockage de 5 à 6 mois, parce que le transport de lisier n'est pas souhaitable ou est même interdit en hiver.

La présente invention a pour but de combattre les gaspillages d'eau potable dans une étable. Elle concerne un dispositif de protection d'un dispositif d'abreuvement automatique et de récupération de l'eau perdue permettant de réaliser une économie d'eau potable importante sans contrarier les animaux à assouvir leur soif.

Elle est relative à une enceinte de protection d'un dispositif d'abreuvement automatique et de récupération de l'eau perdue, comprenant une conduite d'alimentation en eau potable et un téton d'abreuvement automatique actionné par un animal, caractérisée en ce que le système d'alimentation est enfermé derrière une cloison de protection fixée au mur de l'étable et délimitant un passage par lequel l'animal peut passer la tête pour atteindre latéralement l'équipement d'alimentation en eau.

Dans une forme de réalisation particulière de l'invention, la cloison de protection forme la paroi frontale d'un isoloir pendu au mur de l'étable et dans lequel est amené l'équipement d'alimentation en eau potable.

Selon une particularité de l'invention, la cloison est une partie de paroi latérale d'une coupole de protection dans laquelle une ouverture est aménagée, par laquelle l'animal passe la tête pour atteindre le système d'alimentation en eau potable, qui est enfermé dans la coupole de protection.

Contre le mur de l'étable sur lequel est fixé l'équipement d'eau potable est prévu une marche d'environ 15-20 cm pour permettre aux porcelets de s'abreuver.

Les particularités et détails de l'invention apparaîtront au cours de la description des dessins ci-joints, qui reproduisent schématiquement et non de manière non restrictive deux formes de réalisation.

Dans ces dessins :

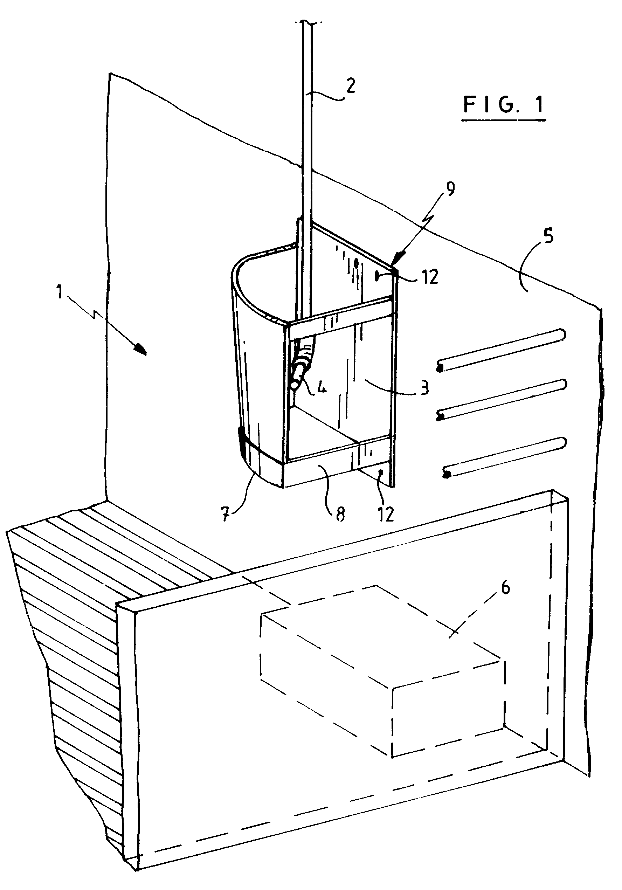

- la figure 1, est une vue en perspective d'une étable pour porcs équipée d'un enceinte de protection d'un dispositif d'alimentation en eau potable et de récupération selon l'invention;

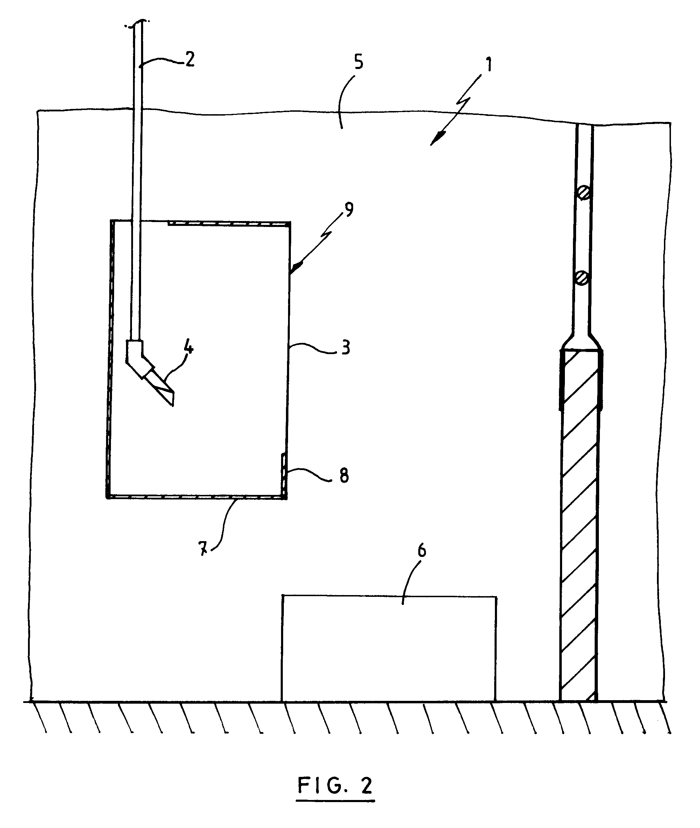

- La figure 2, est une vue de bout d'un abri de protection;
- La figure 3, est une vue analogue à celle de la figure 1 d'une étable pour porcs, équipée d'une coupole de protection;

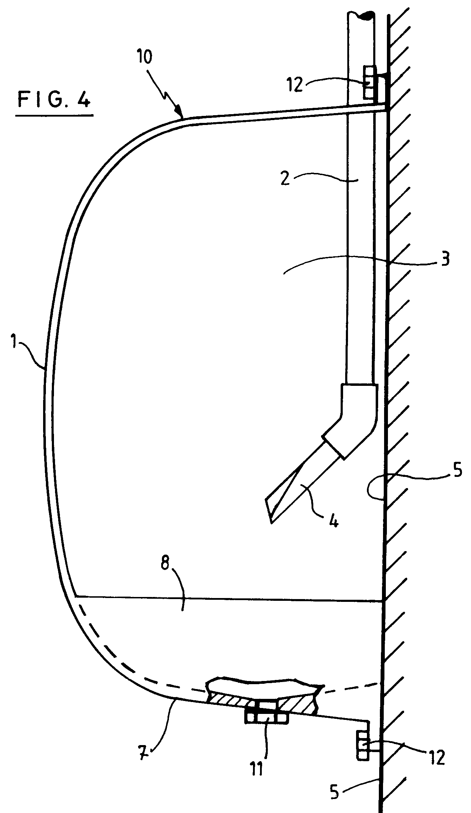

- la figure 4, est une vue latérale de la coupole montrée dans la figure 3.

Dans ces dessins, les mêmes signes de référence désignent des éléments identiques ou analogues.

Dans une première forme de réalisation l'enceinte selon l'invention est formée d'une petite armoire de protection 9 évasée réalisée de préférence en tôle d'acier inoxydable. La petite armoire de protection 9 présente un trou latéral par lequel les animaux introduisent leur tête pour atteindre le système d'alimentation 4, constitué par exemple d'un téton d'abreuvement. La conduite 2 d'alimentation en eau pénètre par le haut dans l'armoire de protection le plus près possible de la paroi pleine latérale. Le téton est incliné vers le bas d'un angle de 45° et est placé tout près de la paroi pleine latérale opposée de l'armoire, afin d'obliger les porcs à y glisser toute la tête pour s'abreuver. La plaquette à poussoir au dessus du téton doit être dirigée vers le haut.

Le baquet est fixé au mur intérieur du compartiment à l'aide de vis 12 introduites dans une série de trous. L'armoire est fixée au mur de préférence à environ 38 cm du mur latéral et à environ 34 cm du sol. L'extrémité du téton 4 doit se trouver à environ 55 cm au-dessus du sol. En dessous de l'armoire de protection 9 on prévoit sur le sol de l'enclos, contre le mur, une surélévation 6 d'environ 15-20 cm, pour permettre aux porcelets de s'abreuver.

L'armoire 9 est munie dans sa partie inférieure d'un fond étanche entouré d'un rebord surélevé 8 d'environ 60 mm. La surélévation est destinée à recueillir l'eau perdue, afin d'empêcher qu'elle ne s'écoule du bac et ne coule sur le sol où elle se mélangerait inévitablement au lisier.

Le fond étanche 7 sert de cuvette pour recueillir l'eau perdue. En-dessous de la cuvette est prévu un bouchon "vissable" en vue du rinçage.

L'équipement d'eau potable doit être placé dans un coin de l'étable afin d'empêcher que les animaux ne salissent l'armoire de protection par leur excréments.

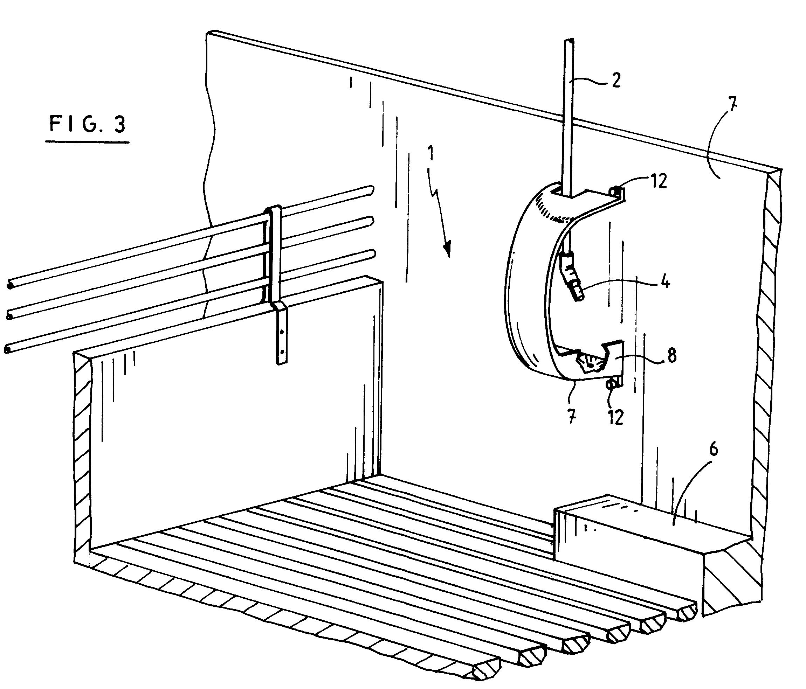

A l'embase du mur 5 sur lequel l'équipement d'eau potable est fixe, est prévue une marche surélevée 6 d'environ 15-20 cm. Les porcelets ou agneaux grimpent avec leurs pattes antérieures sur cette marche pour introduire leur tête dans l'armoire de protection 9 et atteindre le système d'alimentation en eau potable et recueillir l'eau perdue. Dans une seconde forme de réalisation, montrée dans la figure 3, le système d'alimentation en eau potable monté dans une coupole sphérique 10 réalisée en matière synthétique ou en fonte. Une partie de la paroi bombée est munie d'un trou 3 en regard du coin du compartiment d'étable près duquel la coupole de protection 10 est placée.

La coupole présente un fond étanche entouré d'un rebord saillant 8 d'environ 50-80mm.

Au lieu d'un téton on peut utiliser un abreuvoir à remplissage automatique. Le fond de la coupole présente une pente vers un orifice qui est bouché par un bouchon vissé 11.

## Revendications

1. Enceinte de protection d'un dispositif d'abreuvement automatique et de récupération d'eau perdue comprenant une conduite d'alimentation en eau potable et un téton d'abreuvement automatique actionné par l'animal, caractérisée en ce que le système d'alimentation (4) est enfermé derrière une cloison de protection fixée eu mur (5) de l'étable, et délimitant un passage par lequel l'animal peut passer la tête pour atteindre latéralement l'équipement d'alimentation en eau.

2. Enceinte selon la revendication 1, caractérisée en ce qu'elle comprend une cuvette étanche, qui est placée en dessous de l'équipement d'alimentation en eau potable.

3. Enceinte selon la revendication 1, caractérisée en ce que la cloison forme la paroi frontale d'un isoloir, pendu au mur de l'étable et dans lequel est amené l'équipement d'alimentation en eau potable.

4. Enceinte selon la revendication 3 caractérisée en ce que l'isoloir (9) est pourvu d'un fond étanche à l'eau à rebord surélevé (8).

5. Enceinte selon la revendication 3, caractérisé en ce qu'une paroi latérale (3) de l'isoloir (9) est munie d'un trou.

6. Enceinte selon la revendication 1 ou 2, caractérisé en ce que le système d'alimentation (4) est un téton.

7. Enceinte selon la revendication 3, caractérisée en ce que l'isoloir (9) est réalisé en tôles d'acier inoxydable.

8. Enceinte selon l'une des revendications précédentes, caractérisé en ce qu'à l'embase du mur (5) sur lequel l'équipement d'eau potable est fixé, est prévue une marche, surélevée d'environ 15-20cm, afin de permettre aux porcelets de s'abreuver.

F I G. 1

FIG. 2

FIG. 3

FIG. 4

Office européen
des brevets

**RAPPORT DE RECHERCHE EUROPEENNE**

Numero de la demande

EP    92 87 0078

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2 423 151 (SUEVIA HAIGES KG.)<br>* page 5, ligne 29 - ligne 35 *<br>* page 9, ligne 9 - ligne 16; figures 1,5,9 *<br>--- | 1,6,7 | A01K7/00 |
| A | ARATOWERK 'ARATO TRÄNKZAPFEN'<br>1977 , ARATOWERK , KöLN (DE)<br>* page 1 *<br>* page 3, colonne de gauche, alinéa 1 *<br>--- | 6,9 | |
| A | FR-A-2 485 875 (SUEVIA HAIGES KG.)<br>--- | | |
| A | GB-A-2 222 929 (DELUX DESIGNS LIMITED)<br>----- | | |

**DOMAINES TECHNIQUES RECHERCHES (Int. Cl.5 )**

A01K

Le présent rapport a été établi pour toutes les revendications

| Lieu de la recherche | Date d'achèvement de la recherche | Examinateur |
|---|---|---|
| LA HAYE | 02 SEPTEMBRE 1992 | VON ARX V. U. |